# EUROPÄISCHE PATENTSCHRIFT

(11) **EP 1 962 398 B1**
(45) Veröffentlichungstag und Bekanntmachung des Hinweises auf die Patenterteilung: **28.12.2011**
(21) Anmeldenummer: 08405047.5
(22) Anmeldetag: 18.02.2008
(51) Int. Cl.: H02G 3/04, H02G 3/06

(54) **Kabelverschraubung für ein elektrisches Kabel**
Cable connection for an electric cable
Vissage de câble pour un câble électrique

(30) Priorität: 22.02.2007 CH 3012007
(43) Veröffentlichungstag der Anmeldung: 27.08.2008
(73) Patentinhaber: AGRO AG, CH-5502 Hunzenschwil (CH)
(72) Erfinder: Schlegel, Torsten, 31848 Bad Münder (DE); Hermann, Manfred, 58579 Schalksmühle (DE); Boecker, Jörg, 58119 Hagen (DE); Meier, Niklaus, 5037 Muhen (CH)
(74) Vertreter: Groner, Manfred

(56) Entgegenhaltungen:
- DE-B- 1 061 861
- DE-B3- 10 231 309
- GB-A- 2 147 155

## Beschreibung

Die Erfindung betrifft eine Kabelverschraubung für ein elektrisches Kabel nach dem Oberbegriff des Anspruchs 1.

Die GB-A-2 147 155 offenbart eine Kabelverschraubung bei welcher der Einsatz hier aus zwei Ringen besteht. Der eine Ring besteht aus einem gummielastischen Material und der zweite Ring aus einem im Wesentlichen harten und intumeszierenden Werkstoff. Der zweite Ring schwillt bei einer Temperatur an, bei welcher der erste Ring im Wesentlichen gleichzeitig schrumpft. Die gattungsbildende DE-B-10 61 861 offenbart eine Kabelverschraubung mit einem aus gummielastischen Werkstoff hergestelltem Einsatz. Die DE-B-102 31 309 offenbart ein Brandschutzgehäuse mit einer Durchführungsöffnung für ein Kabel in welchem ein freies Restvolumen intumeszierenden Abdichtmaterial gefüllt ist. Die Zugentlastung ist hier minimal.

Weitere Beispiele von Kabelverschraubungen sind in der EP 0 908 995 und EP 0 778 644 offenbart. Mit solchen Kabelverschraubungen werden Kabel beispielsweise in Elektrokästen oder andere elektrische Geräte eingeführt. Die Einführung der Kabel erfolgt jeweils durch einen Durchbruch in einer Wandung des Gerätegehäuses. Im Brandfall besteht nun die Gefahr, dass der Mantel des Kabels in der Kabelverschraubung schmilzt und Rauchgas und Flammen in das Gehäuse eindringen und das Gerät zerstört wird. Um im Brandfall das Eindringen von Rauchgas und Flamme zumindest zu verzögern, ist durch die DE 101 62 271 ein Kabel bekannt geworden, dass einen isolierenden Mantel aufweist, der sich beim Erwärmen räumlich ausdehnt. Der Mantel des Kabels kann beispielsweise ein Stoff enthalten, der bei einer bestimmten Temperatur Gase freisetzt und sich dadurch das Material ausdehnt. Durch die entstehende geschäumte Schicht wird der Durchbruch abgeschottet und das Eindringen von Rauchgas und Flammen in das Gehäuse verhindert.

Der Erfindung liegt die Aufgabe zugrunde, eine Kabelverschraubung der genannten Art zu schaffen, die auch bei der Verwendung von üblichen Kabeln im Brandfall das Eindringen von Rauchgas und Flammen in das Gehäuseinnere zumindest verzögert.

Die Aufgabe ist bei einer gattungsgemässen Kabelverschraubung gemäss Anspruch 1 gelöst. Der Einsatz der erfindungsgemässen Kabelverschraubung übernimmt damit mehrere Funktionen. Ausser der Abdichtung gegenüber Flüssigkeit und Staub sowie der Zugentlastung verhindert nun dieser im Brandfall das Eindringen von Rauchgas und Flammen in das Innere des Gerätes. Damit kann eine möglicherweise vollständige Zerstörung des Gerätes zumindest verzögert werden.

Im Brandfall dehnt sich der Einsatz aus und übt einen Druck auf das in der Kabelverschraubung verlaufende Kabel aus und versiegelt damit den Durchbruch in der Wandung des Gehäuses vollständig. Durch den Expansionsdruck dringt der aufschäumende Einsatz durch die Bohrung des Kompressionselementes nach Aussen und verhindert dadurch zusätzlich, dass Rauchgas und Flammen in das Innere der Kabelschraubung gelangen können. Ein wesentlicher Vorteil der erfindungsgemässen Kabelverschraubung besteht darin, dass bezüglich der Form alle bisher üblichen Dichteinsätze wie bisher hergestellt werden können. Die Montage kann somit wie bisher erfolgen und es sind auch keine zusätzlichen Werkzeuge erforderlich. Vorteilhaft ist auch, dass die genannte Wirkung bei allen üblichen Kabeln zu erwarten ist. Möglich ist auch die Ausbildung der Kabelverschraubung durch das anschliessen von abgeschirmten Kabeln. Auch hier kann der Dichteinsatz mit Ausnahme des Materials wie üblich hergestellt und montiert werden.

Vorzugsweise ist der Einsatz hülsenförmig ausgebildet. Er besitzt vorzugsweise einen ersten und einen zweiten Bereich, wobei der erste Bereich im Kompressionselement und der zweite Bereich im Unterteil angeordnet ist. Da der Einsatz sich bereichsweise in des Kompressionselements befindet, ist dieser insbesondere im Bereich der Bohrung des Kompressionselements im Brandfall sehr schnell einer Hitze ausgesetzt, welche eine Expansion des Dichteinsatzes und damit eine Abschottung zur Wirkung hat.

Der Einsatz ist aus einem gummielastischen Werkstoff hergestellt. Intumeszierender Gummi ist an sich bekannt und ermöglicht eine kostengünstige Herstellung des Einsatzes. Die Kabelverschraubung ist insbesondere für ein abgeschirmtes Kabel vorgesehen. In diesem Fall ist die Abschirmung des Kabels mit dem Unterteil elektrisch verbunden und dies Unterteil ist wiederum elektrisch mit dem Gehäuse des Gerätes verbindbar.

Ein Ausführungsbeispiel der Erfindung wird nachfolgend anhand der Zeichnung näher erläutert. Es zeigen:
- Fig. 1: ein Schnitt durch eine erfindungsgemässe Kabelver- schraubung und abschnittweise das Gehäuse eines Gerätes und
- Fig. 2: ein Schnitt gemäss Fig. 1 jedoch mit dem Dichteinsatz im aufgeschäumten Zustand.

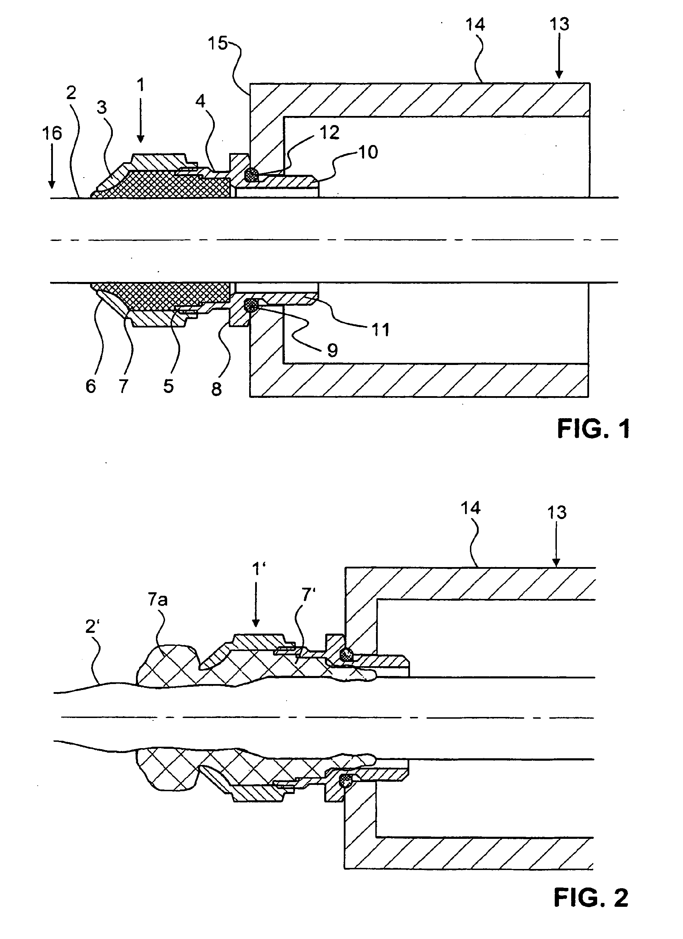

Die Fig. 1 zeigt eine Kabelverschraubung 1, die ein Kabel 2 mit dem Gehäuse 14 eines Gerätes 13 verbindet. Sie weist ein Kompressionselement 3, einen Unterteil 4 sowie einen hülsenförmigen Einsatz 7 auf. Das Kompressionselement 3 ist insbesondere eine Überwurfmutter, könnte aber auch durch ein gewindeloses Element ersetzt werden. Denkbar ist beispielsweise eine Bajonett- oder Pressverbindung. Der Unterteil 4 weist einen Gewindestutzen 10 auf, der in einen Durchbruch 12 in einer Wandung 15 des Gehäuses 14 eingesetzt ist. Eine auf den Gewindestutzen 10 aufgebrachte Dichtung 9 dichtet den Unterteil 4 gegenüber dem Gehäuse 14 ab. Auf das Gewinde 14 des Stutzens 10 ist eine hier nicht gezeigte Mutter aufgesetzt, mit welcher der Unterteil 14 fest mit der Wandung 15 verbunden wird, wobei ein Flansch 18 der Wandung 15 angepresst wird.

Der Einsatz 7 ist so ausgebildet, dass er durch Zusammensetzen von Kompressionselement 3 und Unterteil 4 verpresst wird und sich an die Aussenseite 16 des Kabels 2 anlegt, um dieses zur Zugentlastung zu fixieren. Der Einsatz 7 erstreckt sich von einer Bohrung 6 der Überwurfmutter 3 bis in den Bereich des Unterteils 4, wie die Fig. 1 zeigt. Der Einsatz 7 kann sich zudem auch in den Bereich des Stutzens 11 erstrecken. Er dichtet einerseits das Innere des Gehäuses 14 gegen Flüssigkeit und Staub ab und dient anderseits zur Zugentlastung des Kabels 2. Zudem dient er im Brandfall zur Abschottung der Kabeldurchführung. Hierzu ist der Einsatz 7 aus einem intumeszierenden gummielastischen Werkstoff hergestellt. Im Brandfall bildet der Einsatz 7 eine Dämmschicht innerhalb der Kabelverschraubung 1. Diese erstreckt sich von der genannten Bohrung 6 bis in den Bereich des Unterteils 4. Insbesondere besteht der Einsatz 7 aus intumeszierendem Gummi. Er kann beispielsweise expandierendes Graphit enthalten, das bei einer vorbestimmten Temperatur Gas freisetzt.

Die Wirkungsweise der erfindungsgemässen Kabelverschraubung 1 im Brandfall wird anhand der Fig. 2 näher erläutert. Im einem Brandfall schmilzt in der Regel zunächst der Mantel des Kabels 2, sodass dieses im Durchmesser schrumpft, wie dies in Fig. 2 angedeutet ist. Hat die Hitze die Kabelverschraubung 1 erreicht, so steigt die Temperatur des Kompressioinselements 3 und des Unterteils 4 sowie des Einsatzes 7. Bei einer vorbestimmten Temperatur, beispielsweise bei 200° Grad expandiert der Einsatz 7 vergleichsweise stark, so dass dieser einerseits innerhalb der Kabelverschraubung 1' gegen die Aussenseite des Kabels 16 und anderseits gegen die Innenseite des Kompressionselements 3 und des Unterteils 4 einen Druck ausübt. Zudem quillt der Dichteinsatz 7 durch die Bohrung 6 nach aussen und bildet vor diesem einen Wulst 7a, der die Bohrung 6 vollständig verschliesst. Der expandierte Einsatz 7' bildet somit eine Abschottung und Versiegelung, die ein Eindringen von Flamme und Hitze in das Innere des Gehäuses 14 verhindert und zumindest verzögert. Bei einer rechtzeitigen Brandeindämmung kann damit eine evtl. vollständige Zerstörung des Gerätes 13 verhindert werden.

### Bezugszeichenliste

- 1.: Kabelverschraubung
- 2.: Kabel
- 3.: Kompressionselement
- 4.: Unterteil
- 5.: Gewinde
- 6.: Bohrung
- 7.: Einsatz (dichtende und zugentlastende Einsatz)
- 8.: Flansch
- 9.: Dichtung
- 10.: Gewindestutzen
- 11.: Gewinde
- 12.: Durchbruch
- 13.: Gerät
- 14.: Gehäuse
- 15.: Wandung
- 16.: Aussenseite

## Patentansprüche

1. Kabelverschraubung für ein elektrisches Kabel (2) mit einem Unterteil (4), einem dichtenden und zugentlastenden Einsatz (7) und einem Kompressionselement (3), die jeweils von einer Bohrung (6) durchsetzt und auf das Kabel (2) aufzuschieben sind, welcher Unterteil (4) in einen Durchbruch (12) eines Gehäuses (14) einsetzbar mit diesem verbindbar ist, und welcher Einsatz (7) durch Verspannen des Kompressionselements (3) mit dem Unterteil (4) an die Aussenseite (16) des Kabels (2) anzulegen ist, um das Innere der Kabelverschraubung (1) gegen das Eindringen von Wasser zu schützen, **dadurch gekennzeichnet, dass** der Einsatz (7) einstückig aus einem intumeszierenden gummielastischen Werkstoff hergestellt ist.

2. Kabelverschraubung nach Anspruch 1, **dadurch gekennzeichnet, dass** der dichtende und zugentlastende Einsatz (7) hülsenförmig ausgebildet ist.

3. Kabelverschraubung nach Anspruch 1 oder 2, **dadurch gekennzeichnet, dass** der Dichteinsatz (7) einen ersten und einen zweiten Bereich aufweist, wobei der erste Bereich im Kompressionselement (3) und der zweite Bereich im Unterteil (4) angeordnet ist.

4. Kabelverschraubung nach einem der Ansprüche 1 bis 3, **dadurch gekennzeichnet, dass** sie für ein abgeschirmtes Kabel (2) vorgesehen ist und der Unterteil (4) elektrisch mit dem genannten Gehäuse (14) verbindbar ist.

## Claims

1. Cable gland for an electrical cable (2) having a lower part (4), a sealing and strain-relieving insert (7) and a compression element (3), through each of which a hole (6) passes and which can each be pushed onto the cable (2), which lower part (4) can be inserted into an aperture (12) in a housing (14) and can be connected thereto, and which insert (7) can be placed against the outside (16) of the cable (2) by clamping the compression element (3) to the lower part (4), in order to protect the interior of the cable gland (1) against the ingress of water, **characterized in that** the insert (7) is produced integrally from an intumescent, resilient material.

2. Cable gland according to Claim 1, **characterized in that** the sealing and strain-relieving insert (7) is in the form of a sleeve.

3. Cable gland according to Claim 1 or 2, **characterized in that** the sealing insert (7) has a first and a second area, with the first area being arranged in the compression element (3), and the second area being arranged in the lower part (4).

4. Cable gland according to one of Claims 1 to 3, **characterized in that** it is intended for a screened cable (2) and the lower part (4) can be electrically connected to the said housing (14).

## Revendications

1. Passe-câble à visser pour un câble électrique (2) comprenant une partie inférieure (4), un insert (7) d'étanchéité et d'antitraction et un élément de compression (3), lesquels sont respectivement traversés par un alésage (6) et sont à enfiler sur le câble (2), ladite partie inférieure (4) pouvant être insérée dans une traversée (12) d'un boitier (14) en étant reliée avec celui-ci, et ledit insert (7) devant être appliqué contre le côté extérieur (16) du câble (2) en serrant l'élément de compression (3) avec la partie inférieure (4) afin de protéger l'intérieur du passe-câble à visser (1) contre la pénétration d'eau, **caractérisé en ce que** l'insert (7) est fabriqué d'une seule pièce dans une matière intumescente élastique souple.

2. Passe-câble à visser selon la revendication 1, **caractérisé en ce que** l'insert (7) d'étanchéité et d'antitraction est réalisé en forme de manchon.

3. Passe-câble à visser selon la revendication 1 ou 2, **caractérisé en ce que** l'insert (7) d'étanchéité présente une première et une deuxième zones, la première zone étant disposée dans l'élément de compression (3) et la deuxième zone dans la partie inférieure (4).

4. Passe-câble à visser selon l'une des revendications 1 à 3, **caractérisé en ce qu'**il est conçu pour un câble blindé (2) et la partie inférieure (4) peut être reliée électriquement avec ledit boîtier (14).
